# DEMANDE DE BREVET EUROPEEN

(11) **EP 4 807 945 A1**
(43) Date de publication de la demande: **16.09.2026**
(21) Numéro de dépôt: 26163105.5
(22) Date de dépôt: 09.03.2026
(51) Int. Cl.: H02J 13/00, H02J 3/38, H02J 13/12

(54) **PROCEDE D ESTIMATION D'UNE VARIATION ET PROCEDE DE REDUCTION DES EMISSIONS DE GAZ A EFFET DE SERRE D'UN SYSTEME D ALIMENTATION ELECTRIQUE**

(30) Priorité: 11.03.2025 FR 2502398
(71) Demandeur: Energy Pool Developpement, 73370 Le Bourget-du-Lac (FR)
(72) Inventeur: SAINT-LEGER, Romain, 73370 LE BOURGET-DU LAC (FR); CAQUANT, Lauren, 73370 LE BOURGET-DU-LAC (FR); CARTIGNY, Arnaud, 73370 LE BOURGET-DU-LAC (FR)
(74) Mandataire: Cabinet Beaumont

(57) **Abrégé**

La présente description concerne un procédé d'estimation d'une variation des émissions de gaz à effet de serre d'un système d'alimentation électrique, comprenant :
a) la réception de caractéristiques de fonctionnement d'un ou plusieurs systèmes électriques flexibles ;
b) la réception d'informations indiquant un état de la demande et un état de fonctionnement d'une pluralité de générateurs ;
c) la détermination d'un premier générateur ayant un coût unitaire le plus élevé et de son émission ;
d) la détermination d'un deuxième générateur étant engagé en réserve ;
e) la détermination d'une puissance de réserve engagée et d'un intervalle de temps au cours duquel les systèmes électriques flexibles peuvent faire varier leur consommation sur demande ; et
f) le calcul de la variation des émissions générée par une augmentation de production du deuxième générateur et une réduction de production du premier générateur sur l'intervalle de temps d'activation déterminé à l'étape e).

## Description

### Domaine technique

La présente description concerne de façon générale le domaine des dispositifs et systèmes électroniques de gestion d'énergie, et en particulier un procédé et un système d'estimation d'une variation, et un procédé et un système de réduction des émissions de gaz à effet de serre d'un système d'alimentation électrique.

### Technique antérieure

Une difficulté à laquelle doivent faire face de façon récurrente les systèmes d'alimentation électrique est d'équilibrer, à tout instant, l'offre et la demande afin d'éviter une surcharge du réseau de transmission ou un manque de production, qui pourrait conduire à des pannes d'électricité générales.

La fréquence du système est l'indicateur le plus important d'un déséquilibre de puissance instantanée sur le système d'alimentation électrique. En effet, une augmentation de la consommation d'électricité provoque une augmentation de la demande de puissance sur des machines de production synchrones et provoque ainsi un ralentissement de leur vitesse de rotation. A l'inverse, un surplus de production d'électricité, et donc une augmentation de fréquence, va entraîner une réduction du besoin de puissance instantanée.

En Europe, c'est le rôle du gestionnaire du réseau de transport (TSO - de l'anglais Transmission System Operator) de la zone géographique concernée d'assurer la stabilité du système d'alimentation électrique, en organisant et en supervisant des actions et des mécanismes associés à la réduction ou à la résolution de déséquilibres prévisionnels ou au contrôle de la fréquence. D'autres pays ont des entités qui jouent un rôle similaire. Dans les réseaux de transmission relativement grands, il y a en général trois couches de contrôle d'un déséquilibre prévisionnel ou de contrôle de fréquence utilisées pour faire face aux écarts de fréquence : primaire, secondaire et tertiaire. Le contrôle de fréquence primaire (PFC - de l'anglais Primary Frequency Control), connu aussi sous le nom de réserve de maintien de fréquence (FCR - de l'anglais Frequency Containment Reserve), est assuré de manière prédominante par la capacité de statisme des gros générateurs. Le contrôle de fréquence secondaire ou la réserve automatique de rétablissement de la fréquence (aFRR - de l'anglais « automatic Frequency Restauration Reserve »), assure un relais au contrôle de fréquence primaire dans le maintien de la fréquence du réseau. La réserve secondaire a par exemple un temps de réaction plus long comparé à celui de la réserve primaire. Toutefois, l'arrivée de la technique de réponse de la demande (DR) ou de flexibilité de la demande (en anglais « Demand-Response » (DR) ou « Demand-Side Management » (DSM) ou « Demand-Side Flexibility » (DSF)) dans le développement des réseaux intelligents d'aujourd'hui a fait du site demandeur, autrement appelé site de soutirage ou consommateur d'électricité, un nouvel acteur de la stabilité d'un système d'alimentation électrique. En effet, les sites industriels souhaitent souvent accepter une certaine flexibilité dans leur consommation de puissance en échange d'incitations financières comme un coût réduit de l'énergie ou une rémunération explicite séparée du coût de fourniture.

L'énergie distribuée par le système d'alimentation électrique est générée par un ensemble de dispositifs ayant des méthodes de génération d'énergie variées, chaque dispositif ayant un coût de production et une émission de gaz à effet de serre associée.

Il existe un besoin de réduire l'émission de gaz à effet de serre d'un système d'alimentation électrique tout en assurant une stabilité du système.

### Résumé de l'invention

Un mode de réalisation prévoit un procédé d'estimation d'une variation des émissions de gaz à effet de serre d'un système d'alimentation électrique fonctionnant en réponse de la demande, le procédé comprenant :
a) la réception, par un dispositif de commande, de caractéristiques de fonctionnement, comprenant au moins une période de disponibilité et une capacité d'engagement, d'un ou plusieurs systèmes électriques flexibles ;
b) la réception, par le dispositif de commande, d'informations indiquant un état de la demande sur le système d'alimentation électrique et un état de fonctionnement d'une pluralité d'actifs générateurs du système d'alimentation électrique ;
c) la détermination, par le dispositif de commande, d'un premier actif générateur parmi la pluralité d'actifs générateurs du système d'alimentation électrique, le premier actif générateur ayant un coût unitaire le plus élevé et la détermination de son émission de gaz à effet de serre ;
d) la détermination, par le dispositif de commande, d'un deuxième actif générateur parmi la pluralité d'actifs générateurs du système d'alimentation électrique, le deuxième actif générateur étant engagé en réserve ;
e) la détermination, par le dispositif de commande, d'une puissance de réserve engagée et d'un intervalle de temps d'activation au cours duquel les systèmes électriques flexibles peuvent faire varier leur consommation sur demande par une puissance inférieure ou égale à la puissance de réserve engagée ; et
f) le calcul, par le dispositif de commande, de la variation des émissions de gaz à effet de serre générée par une augmentation de production du deuxième actif générateur et une réduction de production du premier actif générateur sur l'intervalle de temps d'activation déterminé à l'étape e).

Un mode de réalisation prévoit un procédé de réduction des émissions de gaz à effet de serre d'un système d'alimentation électrique fonctionnant en réponse de la demande, le procédé comprenant :
- le procédé d'estimation d'une variation des émissions de gaz à effet de serre décrit ci-dessus ;

g) la transmission, par le dispositif de commande, de la puissance de réserve engagée et de l'intervalle de temps d'activation, définis à l'étape e), au système d'alimentation électrique ; et
h) la transmission, par le dispositif de commande, d'une commande à l'au moins un des systèmes électriques flexibles pour le rendre disponible sur demande pour la puissance de réserve engagée et sur l'intervalle de temps d'activation définis à l'étape e).

Selon un mode de réalisation, le deuxième actif générateur correspond au générateur marginal sur le marché de réserve.

Selon un mode de réalisation, la puissance de réserve engagée et l'intervalle de temps d'activation sont déterminés de sorte que la variation des émissions de gaz à effet de serre soit négative, correspondant à une réduction des émissions de gaz à effet de serre.

Selon un mode de réalisation, à l'étape e), une fonction de résolution d'un problème d'optimisation est utilisée pour déterminer l'intervalle de temps d'activation.

Selon un mode de réalisation, le procédé comprend en outre, à l'étape e), pour chaque pas de temps de la période de disponibilité de l'un ou plusieurs systèmes électriques flexibles, le calcul, par le dispositif de commande, de la variation des émissions de gaz à effet de serre générée par une augmentation de production du deuxième actif générateur et une réduction de production du premier actif générateur sur le pas de temps.

Selon un mode de réalisation, les pas de temps de la période de disponibilité de l'un ou plusieurs systèmes électriques flexibles sont triés, par le dispositif de commande, selon la variation des émissions de gaz à effet de serre calculée à l'étape e) et sont sélectionnés de sorte à obtenir une réduction des émissions de gaz à effet de serre, telle que calculée à l'étape f), la plus élevée.

Selon un mode de réalisation, l'état de fonctionnement d'un actif générateur comprend une puissance d'engagement en réserve de l'actif générateur.

Selon un mode de réalisation, le coût unitaire d'un actif générateur correspond à un coût monétaire d'une unité d'énergie.

Selon un mode de réalisation, l'émission de gaz à effet de serre d'un actif générateur correspond à l'émission de gaz à effet de serre produite par la génération d'une unité d'énergie.

Un autre mode de réalisation prévoit un dispositif de commande configuré pour :
a) recevoir des caractéristiques de fonctionnement, comprenant au moins une période de disponibilité et une capacité d'engagement, d'un ou plusieurs systèmes électriques flexibles ;
b) recevoir des informations indiquant un état de la demande sur le système d'alimentation électrique et un état de fonctionnement d'une pluralité d'actifs générateurs du système d'alimentation électrique ;
c) déterminer un premier actif générateur parmi la pluralité d'actifs générateurs du système d'alimentation électrique, le premier actif générateur ayant un coût unitaire le plus élevé et la détermination de son émission de gaz à effet de serre ;
d) déterminer un deuxième actif générateur parmi la pluralité d'actifs générateurs du système d'alimentation électrique, le deuxième actif générateur étant engagé en réserve ;
e) déterminer une puissance de réserve engagée et un intervalle de temps d'activation au cours duquel les systèmes électriques flexibles peuvent faire varier leur consommation sur demande par une puissance inférieure ou égale à la puissance de réserve engagée ; et
f) calculer la variation des émissions de gaz à effet de serre générée par une augmentation de production du deuxième actif générateur et une réduction de production du premier actif générateur sur l'intervalle de temps d'activation déterminé à l'étape e).

Selon un mode de réalisation, le dispositif est en outre configuré pour :
g) transmettre la puissance de réserve engagée et l'intervalle de temps d'activation, définis à l'étape e), au système d'alimentation électrique ; et
h) transmettre une commande à l'au moins un des systèmes électriques flexibles pour le rendre disponible sur demande pour la puissance de réserve engagée et sur l'intervalle de temps d'activation définis à l'étape e).

Un autre mode de réalisation prévoit un système de régulation d'une puissance comprenant :
- le dispositif décrit ci-dessus ; et
- un ou plusieurs systèmes électriques flexibles,
le dispositif de commande étant configuré pour communiquer avec l'un ou plusieurs systèmes électriques flexibles et avec le système d'alimentation électrique.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un diagramme illustrant un système d'alimentation en puissance selon un mode de réalisation de la présente description ;
la figure 2 est un diagramme illustrant un système de production et de consommation électrique selon un mode de réalisation de la présente description ;
la figure 3A représente un procédé d'estimation d'une réduction des émissions de gaz à effet de serre d'un système d'alimentation électrique selon un mode de réalisation de la présente description ;
la figure 3B représente un procédé de réduction des émissions de gaz à effet de serre d'un système d'alimentation électrique selon un mode de réalisation de la présente description ;
la figure 4A est un graphe illustrant le coût unitaire d'une unité de puissance produite par une pluralité de dispositifs ainsi qu'un exemple d'une répartition de la puissance produite par le système d'alimentation électrique entre la pluralité de dispositifs selon un mode de réalisation de la présente description; et
la figure 4B est un graphe illustrant le coût unitaire d'une unité de puissance produite par une pluralité de dispositifs ainsi qu'un exemple d'une répartition de la puissance produite par le système d'alimentation électrique entre la pluralité de dispositifs selon un autre mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, l'évaluation d'un écart de fréquence d'un système d'alimentation électrique alternatif et des algorithmes d'optimisation sont connus d'une personne du métier et ne sont pas détaillés dans la présente description.

Dans la description qui suit, un actif est défini par un dispositif configuré pour délivrer ou recevoir de l'électricité et configuré pour moduler une énergie électrique reçue ou délivrée par rapport à une puissance de fonctionnement.

Dans la description qui suit, un système d'alimentation électrique est défini comme comprenant des consommateurs d'électricité, des producteurs d'électricité et un réseau d'alimentation électrique, le réseau d'alimentation électrique comprenant un ensemble d'infrastructures physiques d'acheminement d'électricité.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

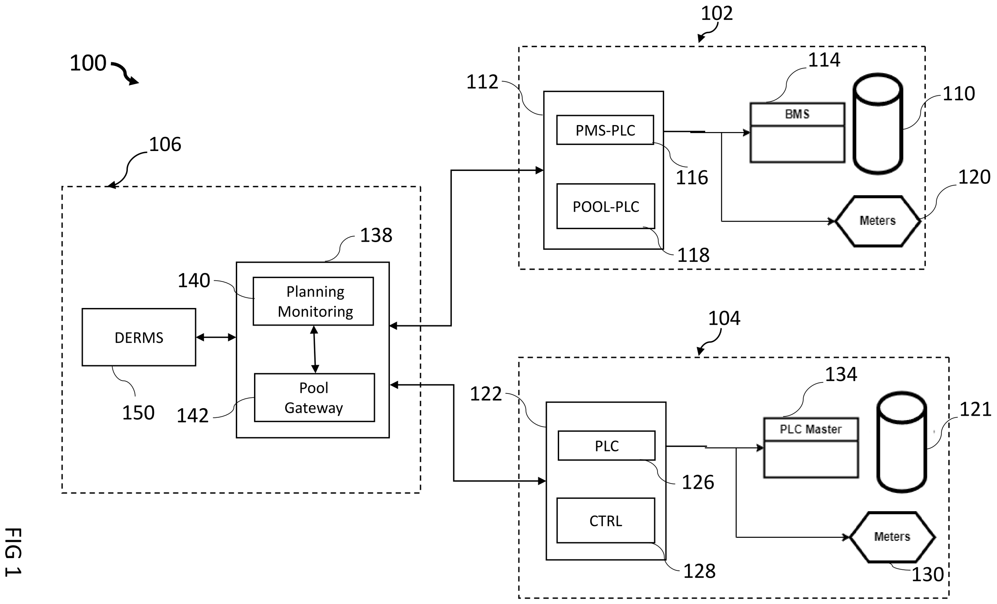

La figure 1 est un diagramme illustrant un système 100 d'alimentation en puissance selon un mode de réalisation de la présente description.

Dans l'exemple de la figure 1, le système 100 comprend un premier site client 102, un deuxième site client 104 et un système central de gestion d'énergie 106.

Chacun des sites clients 102, 104 dans le système 100 correspond à un site qui comprend au moins un actif, de l'énergie électrique étant reçue par le site client 102, 104 à partir d'un système d'alimentation électrique, par exemple un système d'alimentation électrique alternatif. Par exemple, un ou plusieurs contrats de fourniture d'énergie sont en place impliquant les sites clients 102, 104 et des opérateurs du système, établissant une relation commerciale entre les entités. Bien que deux sites clients 102, 104 soient illustrés dans l'exemple de la figure 1, dans des variantes de réalisation il peut y avoir un nombre quelconque de sites clients gérés par le système central de gestion d'énergie 106.

Dans l'exemple de la figure 1, l'actif du site client 102 est un réservoir de stockage d'énergie, par exemple une batterie 110 ou par exemple un banc de batteries à haute capacité.

La batterie 110 est par exemple couplée à une première unité de commande 112 sur site par l'intermédiaire d'un système de gestion de batterie 114 (« BMS », de l'anglais « Battery Management System »). La première unité de commande 112 comprend par exemple une première interface de surveillance et de commande 116 (« PMS-PLC ») et une première interface de communication et de contrôle 118 (« POOL-PLC »). La première interface de surveillance et de commande 116 est par exemple un contrôleur logique programmable (« PLC » de l'anglais « Programmable Logic Controller »), par exemple configuré pour mettre en œuvre une gestion de puissance, de manière similaire au rôle d'un système de gestion de puissance (PMS, en anglais « Power Management System ») ou configuré pour mettre en œuvre une boîte de réponse de la demande (DR).

La première interface de surveillance et de commande 116 est par exemple couplée à un ou plusieurs premiers dispositifs de mesure sur site 120 (METERS) configurés pour surveiller les puissances actives et réactives pour une seule et/ou pour les trois phases, et/ou d'autres propriétés électriques. Par exemple, les premiers dispositifs de mesure sur site 120 comprennent un ou plusieurs dispositifs de mesure électriques surveillant un courant électrique fourni au site et/ou reçu par le site, et un ou plusieurs dispositifs de mesure électriques surveillant un courant électrique reçu de la batterie 110, un ou plusieurs dispositifs de mesure électriques surveillant des phases des signaux électriques, et un ou plusieurs fréquencemètres AC (courant alternatif) surveillant la fréquence des tensions d'alimentation électriques présentes sur le réseau électrique, telles que vues par le site 102. D'autres propriétés qui peuvent être mesurées comprennent l'énergie électrique et le facteur de puissance. La première interface de surveillance et de commande 116 est par exemple configurée pour recevoir des données de mesure à partir des premiers dispositifs de mesure sur site 120.

La première unité de commande 112 est par exemple configurée pour assurer l'interface de communication entre le site client 102 et le système central de gestion 106, par exemple par l'intermédiaire de la première interface de communication et de contrôle 118.

La première interface de communication et de contrôle 118 est par exemple configurée pour communiquer avec le système central de gestion d'énergie 106, et dans certains cas avec des équipements clients, par l'intermédiaire du réseau Internet. Par exemple, bien que cela ne soit pas illustré en figure 1, la connexion entre la première interface de communication et de contrôle 118 et le réseau Internet se fait soit par l'intermédiaire d'un réseau de communication commuté, comme par l'intermédiaire d'un modem ADSL (ligne d'abonné numérique asymétrique), soit par l'intermédiaire d'une connexion sans fil, par exemple comprenant un réseau de communication cellulaire. La connexion entre la première interface de communication et de contrôle 118 et le réseau Internet est par exemple une connexion sécurisée, par exemple via l'utilisation d'un VPN (réseau virtuel privé, en anglais « Virtual Private Network »).

Le site client 104 comprend par exemple un actif 121, une deuxième unité de commande 122 jouant un rôle similaire à la première unité de commande 112 du site client 102, et qui ne sera pas décrite de nouveau en détail. La deuxième unité de commande 122 comprend par exemple une deuxième interface de surveillance et de commande 126 (« PLC ») et une deuxième interface de communication et de contrôle 128 (« CTRL ») qui sont par exemple similaires à la première interface de surveillance et de commande 116 et à la première interface de communication et de contrôle 118.

La deuxième interface de surveillance et de commande 126 est par exemple couplée à un ou plusieurs deuxièmes dispositifs de mesure sur site 130 (METERS) jouant un rôle similaire aux premiers dispositifs de mesure sur site 120.

L'actif 121 est par exemple couplé à la deuxième unité de commande 122 par l'intermédiaire d'un contrôleur logique programmable maître 134 (« PLC Master »).

Bien que dans l'exemple de la figure 1 une seule unité de commande 112, 122 soit prévue pour chaque site 102, 104, dans des variantes de réalisation certains sites pourraient comprendre plusieurs unités de commande.

Le système de gestion central 106 comprend par exemple un système de commande et d'acquisition de données 138, qui est par exemple implémenté par un système de gestion de ressources d'énergie distribuées (DERMS) ou qui est par exemple un système de commande de supervision et d'acquisition de données (SCADA, de l'anglais « Supervisory Control And Data Acquisition"), responsable de la réception de données à partir de chacune des interfaces de communication et de contrôle 118, 128, et est configuré pour fournir des signaux de commande aux sites clients 102, 104. En outre, le système de commande et d'acquisition de données 138 est par exemple responsable de l'acquisition et du stockage de mesures de données provenant des sites 102, 104, et aussi d'informations concernant l'état des sites. Le système de commande et d'acquisition de données 138 comprend par exemple un circuit de contrôle et de planification 140 (« Planning Monitoring ») et une interface centrale 142 (« Pool gateway »). L'interface centrale 142 est par exemple configurée pour recevoir et envoyer des données aux sites 102, 104 et au circuit de contrôle et de planification 140.

Le système central de gestion d'énergie 106 comprend aussi par exemple un système de gestion de ressources d'énergie distribuées (DERMS) 150, qui est par exemple une plateforme informatique configurée pour organiser une répartition de ressources entre des charges ou des batteries de divers sites clients du système 100. Le DERMS 150 fournit aussi par exemple une interface avec un serveur de marchés et avec un serveur d'opérateur de réseau électrique.

Par exemple, le serveur de marchés fournit des informations sur les prix de l'électricité pour des périodes courantes et/ou futures, et des informations sur des activations demandées par l'opérateur de réseau électrique. Le serveur d'opérateur de réseau électrique correspond par exemple à une plateforme informatique d'un opérateur du réseau électrique fournissant l'électricité aux sites clients 102, 104. En Europe, l'opérateur de réseau électrique correspond par exemple au gestionnaire du réseau de transport (TSO), et/ou à l'opérateur de système distribué (DSO). Par exemple, le serveur d'opérateur de réseau électrique fournit des ordres d'activation au DERMS 150, et le DERMS 150 fournit des données de commande, comme des données de surveillance et/ou des états de charges, au serveur d'opérateur de réseau électrique.

Le DERMS 150 est par exemple configuré pour déterminer comment l'utilisation d'énergie au niveau des sites clients 102, 104 peut être adaptée au vu des prix de l'électricité pour des périodes courantes et/ou futures afin de réduire les coûts d'énergie et/ou de générer des revenus au niveau des sites client, par exemple par des réductions dans les charges de matière première ou en équilibrant des services dans le système d'alimentation électrique. Par exemple, le DERMS 150 est agencé pour transmettre des signaux de commande aux sites clients 102, 104 indiquant des périodes au cours desquelles la charge de la batterie 110 à partir du système d'alimentation électrique doit être mise en priorité, par exemple, en raison de prix de l'électricité relativement bas, et des périodes pendant lesquelles une décharge de la batterie 110 vers le système d'alimentation électrique doit être mise en priorité, par exemple en raison de prix de l'électricité relativement élevés.

Dans l'exemple de la figure 1, les sites clients 102, 104 sont des sites consommateurs d'électricité. Chaque site client 102, 104 regroupe un ou plusieurs consommateurs. Bien que cela ne soit pas représenté dans l'exemple de la figure 1, le système central de gestion d'énergie 106 est par exemple relié à un ou plusieurs sites clients générateurs comprenant un ou plusieurs actifs configurés pour générer de l'électricité et/ou relié à un ou plusieurs sites clients mixtes comprenant au moins un actif consommateur d'électricité et au moins un actif générateur d'électricité.

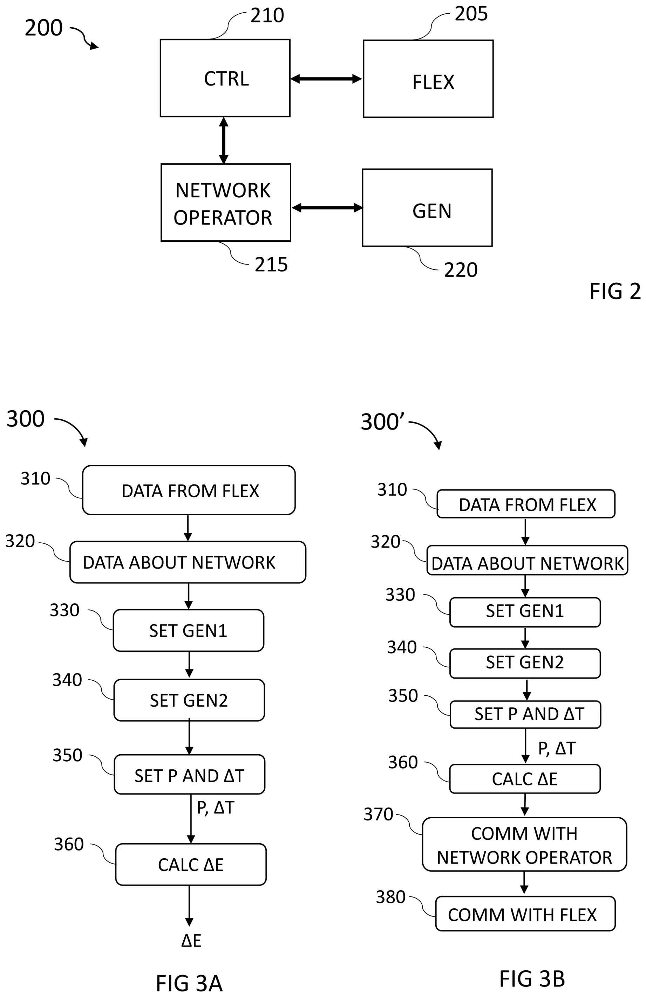

La figure 2 est un diagramme illustrant un système 200 de production et de consommation électrique selon un mode de réalisation de la présente description.

Le système 200 comprend :
- un système flexible 205 (« FLEX »), par exemple le site client 102 ou le site 104 décrit en relation avec la figure 1 ;
- un dispositif de commande 210 (« CTRL »), par exemple compris dans le système central de gestion d'énergie 106 décrit en relation avec la figure 1, par exemple correspondant au circuit de contrôle et de planification 140 ;
- un gestionnaire 215 (« NETWORK OPERATOR ») du système d'alimentation électrique ; et
- un générateur 220 (« GEN »).

Par « système flexible », on entend ici un ou plusieurs consommateurs d'électricité étant en mesure de réduire ou augmenter leur consommation sur demande et/ou un ou plusieurs producteurs d'électricité étant en mesure de réduire ou augmenter leur production sur demande et/ou un ou plusieurs actifs de stockage d'électricité étant en mesure de réduire ou augmenter leur électricité stockée sur demande. Un système flexible est par exemple un consommateur industriel ou tertiaire, un réservoir de stockage d'électricité, une centrale de production, etc. Un système flexible correspond par exemple à un site client décrit en relation avec la figure 1 et comprenant une interface de communication. L'interface de communication est par exemple configurée pour communiquer avec le dispositif de commande 210. Selon un mode de réalisation, le dispositif de commande 210 est configuré pour recevoir des caractéristiques de fonctionnement du système flexible 205, comprenant une ou plusieurs périodes de disponibilité et une capacité d'engagement en réserve. Le système flexible 205 s'engage, par exemple par l'intermédiaire d'un contrat, à consommer une puissance électrique supérieure ou égale à la capacité d'engagement et à réduire sa consommation d'électricité sur demande, d'une puissance inférieure ou égale à la capacité d'engagement, sur l'une ou plusieurs plages de disponibilité.

Le dispositif de commande 210 comprend par exemple un ou plusieurs processeurs configurés pour exécuter des instructions du logiciel stockées dans une mémoire du dispositif. Dans une alternative, le dispositif de commande 210 comprend un circuit dédié tel qu'un circuit intégré propre à une application (ASIC, de l'anglais « Application-Specific Integrated Circuit »).

Le générateur 220 est par exemple configuré pour générer une puissance électrique et pour transmettre cette puissance électrique au système d'alimentation électrique, par exemple via le gestionnaire 215, de sorte que cette puissance électrique soit distribuée entre des consommateurs, par exemple comprenant le système flexible 205. Par exemple, un ou plusieurs contrats de fourniture d'énergie sont en place impliquant le générateur 220 et des opérateurs du réseau, établissant une relation commerciale entre les entités. Le générateur 220 est par exemple un barrage hydraulique, une éolienne, un panneau photovoltaïque, une centrale nucléaire, une centrale électrique à charbon, etc.

Le générateur 220 est par exemple configuré pour être engagé en réserve primaire et/ou secondaire et/ou tertiaire auprès du système d'alimentation électrique. Dans la présente description, on entend par « générateur » un dispositif configuré pour générer et délivrer au réseau une puissance électrique, inférieure ou égale à une puissance maximale propre. On entend par « générateur engagé en réserve », un dispositif configuré pour générer et délivrer au réseau une puissance électrique inférieure à sa puissance maximale et/ou une puissance électrique supérieure à sa puissance minimale, de sorte que le générateur engagé en réserve est en mesure d'augmenter et/ou de réduire sa puissance électrique délivrée sur demande, par exemple en réponse à une variation d'un écart de fréquence du système d'alimentation électrique ou par exemple en réponse à une commande du gestionnaire 215 ou du dispositif de commande 210. Un générateur engagé en réserve est par exemple engagé en FCR ou en aFRR ou en mFRR (réserve manuelle de rétablissement de la fréquence, de l'anglais « manual Frequency Restoration Reserve »).

Selon un mode de réalisation, le dispositif de commande 210 est configuré pour recevoir, par exemple du gestionnaire 215 ou d'un opérateur de marché, des informations indiquant un état de la demande sur le système d'alimentation électrique et un état de fonctionnement du générateur 220 du système d'alimentation électrique. L'état de la demande sur le système d'alimentation électrique correspond par exemple à une puissance électrique demandée par un ensemble de consommateurs au système d'alimentation électrique. La demande varie par exemple en fonction du temps. L'état de fonctionnement d'un générateur comprend par exemple au moins un parmi :
- une puissance générée par le générateur ;
- des caractéristiques d'un engagement en réserve du générateur ;
- un coût unitaire d'une énergie produite par le générateur ; et
- une émission unitaire de gaz à effet de serre du générateur.

Selon d'autres modes de réalisation, le dispositif de commande 210 est configuré pour recevoir des informations indiquant un état de la demande sur le système d'alimentation électrique et/ou un état de fonctionnement du générateur 220 du système d'alimentation électrique par un autre dispositif que le gestionnaire 215.

Par « coût unitaire », on entend le prix de revente d'une unité d'énergie générée par un générateur. Le coût unitaire s'exprime par exemple en euro par mégawatt-heure. Le coût unitaire correspond par exemple au coût d'opportunité vis-à-vis de la vente au marché de gros.

Par « émission unitaire de gaz à effet de serre », on entend l'émission d'une masse de gaz à effet de serre produite par la génération d'une unité d'énergie générée par un générateur. L'émission unitaire de gaz à effet de serre s'exprime par exemple en gramme équivalent CO2 par mégawatt-heure, noté « gCO2e/MWh » ou « gCO2éq/MWh ». Par gaz à effet de serre on entend le dioxyde de carbone, le méthane, le dioxyde d'azote, etc. Une émission de chacun de ces gaz peut être exprimée en gramme équivalent CO2.

Le gestionnaire 215 est par exemple le gestionnaire de réseau de transport (GRT) en Europe, ou un système équivalent dans d'autres régions du monde.

Bien qu'un seul système flexible 205 et qu'un seul générateur 220 soient illustrés dans l'exemple de la figure 2, le système 200 comprend par exemple une pluralité de systèmes flexibles 205 et/ou une pluralité de générateurs 220.

La figure 3A représente un procédé 300 d'estimation d'une réduction des émissions de gaz à effet de serre du système d'alimentation électrique selon un mode de réalisation de la présente description. Par exemple, le procédé 300 correspond à une simulation du fonctionnement du système d'alimentation électrique permettant l'estimation de la réduction des émissions de gaz à effet de serre.

Le procédé 300 est par exemple mis en œuvre par un dispositif de calcul et de commande, par exemple le dispositif de commande 210 décrit en relation avec la figure 2 ou par exemple un ordinateur. En particulier, le procédé 300 est par exemple mis en œuvre par logiciel, le dispositif de calcul et de commande comprenant un ou plusieurs processeurs configurés pour exécuter des instructions du logiciel stockées dans une mémoire du dispositif. Dans une alternative, le procédé 300 est par exemple, au moins partiellement, mis en œuvre par un circuit dédié tel qu'un circuit intégré propre à une application (ASIC, de l'anglais « Application-Specific Integrated Circuit »).

Le procédé 300 est par exemple mis en œuvre pour estimer une réduction des émissions de gaz à effet de serre du système d'alimentation électrique sur une période d'optimisation fixée. La période d'optimisation est par exemple comprise entre 15 minutes et 1 année. La période d'optimisation est par exemple divisée en une pluralité de pas de temps, la durée d'un pas de temps étant comprise entre 1 seconde et 1 année.

Le procédé 300 comprend par exemple une étape 310 (« DATA FROM FLEX ») de réception de données au cours de laquelle le dispositif de calcul et de commande est configuré pour recevoir des données de chacun des systèmes flexibles 205 décrits en relation avec la figure 2 sur la période d'optimisation. Chaque système flexible 205 est par exemple configuré pour envoyer une ou plusieurs périodes de disponibilité et une capacité d'engagement en réserve sur la période d'optimisation. Chaque système flexible 205 est par exemple en outre configuré pour envoyer un nombre maximal d'activations sur la période d'optimisation. Le dispositif de calcul et de commande est par exemple configuré pour stocker ces données dans une mémoire. Selon un mode de réalisation, un contrat commercial est établi entre chacun des systèmes flexibles 205 et le dispositif de calcul et de commande, par exemple sur une période comprenant la période d'optimisation.

Le procédé 300 comprend par exemple une étape 320 (« DATA ABOUT NETWORK »), par exemple suivant l'étape 310, de réception de données au cours de laquelle le dispositif de calcul et de commande est configuré pour recevoir des données caractérisant le système d'alimentation électrique. Le dispositif de calcul et de commande est par exemple configuré pour recevoir des informations indiquant un état de la demande sur le système d'alimentation électrique et un état de fonctionnement des actifs du système d'alimentation électrique. Selon un mode de réalisation, le dispositif de calcul et de commande est configuré pour recevoir au moins un parmi :
- un prix unitaire de l'électricité pour chacun d'une pluralité de pas de temps sur la période d'optimisation ;
- une capacité de production de chacun des actifs du système d'alimentation électrique pour chaque pas de temps sur la période d'optimisation, par exemple une capacité de production de chacun des générateurs 220 ainsi qu'une capacité éventuelle d'engagement en réserve ;
- une demande sur le système d'alimentation électrique pour chaque pas de temps sur la période d'optimisation ; et
- une probabilité d'activation pour chaque pas de temps sur la période d'optimisation.

Par « activation », on entend une modulation d'une puissance générée par un générateur, consommée par un consommateur ou stockée par un actif de stockage, de sorte à réguler l'offre et la demande du système d'alimentation électrique, par un actif étant engagé en réserve. La probabilité d'activation correspond par exemple à une probabilité qu'un écart de fréquence du réseau dépasse un seuil fixé.

Le dispositif de calcul et de commande est par exemple configuré pour recevoir ces informations, par exemple par l'intermédiaire du gestionnaire 215 décrit en relation avec la figure 2 ou d'un opérateur de marché.

Selon un autre mode de réalisation, le dispositif de calcul et de commande est configuré pour recevoir des données sur un intervalle de temps antérieur à la période d'optimisation et pour effectuer une analyse statistique pour déterminer ces informations sur la période d'optimisation. Selon un autre mode de réalisation, un dispositif de calcul externe au système 100 décrit en relation avec la figure 1 est configuré pour recevoir des données sur un intervalle de temps antérieur à la période d'optimisation et pour effectuer une analyse statistique pour déterminer ces informations sur la période d'optimisation. Le dispositif de calcul externe est en outre configuré pour transmettre ces informations au dispositif de calcul et de commande.

En pratique, l'ordre des étapes 310 et 320 peut être inversé.

Le procédé 300 comprend par exemple une étape 330 (« SET GEN1 »), par exemple suivant les étapes 310 et 320. Au cours de l'étape 330, le dispositif de calcul et de commande est configuré pour déterminer, pour chaque pas de temps de la période d'optimisation, un premier générateur GEN1 parmi la pluralité de générateurs 220 du système d'alimentation électrique. Le premier générateur GEN1 correspond par exemple au générateur 220 ayant un coût unitaire le plus élevé. Selon un mode de réalisation, les générateurs 220 du système d'alimentation électrique sont ordonnés selon leur coût unitaire croissant. Par exemple, le coût unitaire correspond au coût monétaire de production d'un mégawatt-heure par un générateur ou correspond au coût d'opportunité d'un mégawatt-heure d'un actif engagé en réserve, c'est-à-dire au coût de revente du mégawatt-heure par l'actif si l'actif n'était pas engagé en réserve.

L'étape 330 comprend par exemple en outre la détermination d'une émission unitaire de gaz à effet de serre par le premier générateur GEN1 lors de la génération d'une unité de puissance. Par exemple, la détermination d'une émission unitaire de gaz à effet de serre est effectuée à partir d'une base de données, par exemple la base de données publique nommée « Base Empreinte », par exemple stockée en mémoire par le dispositif de calcul et de commande. Selon d'autres modes de réalisation, le dispositif de calcul et de commande est configuré pour recevoir une émission unitaire de gaz à effet de serre pour chacun des générateurs du système d'alimentation électrique. L'émission unitaire de gaz à effet de serre du premier générateur GEN1 est par exemple stockée en mémoire par le dispositif de calcul et de commande.

Selon un mode de réalisation, l'émission unitaire de gaz à effet de serre est déterminée et stockée en mémoire pour chaque générateur du système.

Le procédé 300 comprend par exemple une étape 340 (« SET GEN2 »), par exemple suivant l'étape 330. Au cours de l'étape 340, le dispositif de calcul et de commande est configuré pour déterminer, pour chaque pas de temps de la période d'optimisation, un ou plusieurs deuxièmes générateurs GEN2 parmi la pluralité de générateurs 220 du système d'alimentation électrique.

Selon un mode de réalisation, le deuxième générateur GEN2 correspond, pour chaque pas de temps, au générateur étant engagé en réserve et ayant le coût unitaire le plus élevé parmi les générateurs engagés en réserve. Le deuxième générateur GEN2 correspond par exemple au générateur marginal sur le marché de réserve. Selon un autre mode de réalisation, le deuxième générateur GEN2 correspond, pour chaque pas de temps, à un générateur 220 étant engagé en réserve et ayant par exemple une émission unitaire de gaz à effet de serre inférieure à l'émission unitaire de gaz à effet de serre du premier générateur. Selon un mode de réalisation, le deuxième générateur GEN2 correspond, pour chaque pas de temps, au générateur étant engagé en réserve et ayant l'émission unitaire de gaz à effet de serre la plus faible parmi les générateurs engagés en réserve.

En particulier, le deuxième générateur GEN2 correspond à un ou plusieurs générateurs, pour chaque pas de temps de la période d'optimisation.

L'émission unitaire de gaz à effet de serre du deuxième générateur GEN2 est par exemple déterminée de façon similaire à celle du premier générateur GEN1 et stockée en mémoire par le dispositif de calcul et de commande.

Selon un mode de réalisation, les générateurs 220 sont classés dans différentes catégories comprenant des centrales de référence (en anglais, « base load plants »), configurées pour générer une puissance de référence, et des centrales de forte demande (en anglais, « peak power plants »), configurées pour générer une puissance permettant de répondre à une relativement forte demande de puissance électrique.

Le premier générateur GEN1 est par exemple le générateur marginal, dont le coût marginal de production d'électricité est le plus élevé parmi les générateurs appelés à produire. Le premier générateur GEN1 est en outre configuré pour moduler sa production ou sa consommation à la hausse et/ou à la baisse.

Le deuxième générateur GEN2 est par exemple un générateur dont le coût marginal de production d'électricité est suffisamment faible pour que le manque à gagner à se proposer en réserve plutôt que sur le marché de gros leur confère un coût de fourniture des réserves important. Par « coût marginal de production », on entend ici le coût variable de production d'une unité d'énergie, c'est-à-dire comprenant le coût des matières première et un coût associé à l'émission de gaz à effet de serre mais ne comprenant pas le coût de financement du générateur, les salaires des employés, etc. Le deuxième générateur GEN2 est en outre configuré pour moduler sa production ou sa consommation à la hausse et/ou à la baisse.

Selon des modes de réalisation, plusieurs deuxièmes générateurs GEN2 sont déterminés lors de l'étape 340.

Le procédé 300 comprend par exemple une étape 350 (« SET P AND ΔT »), par exemple suivant les étapes 330 et 340. Au cours de l'étape 350, le dispositif de calcul et de commande est par exemple configuré pour déterminer une puissance ou une capacité de réserve engagée (« P ») et un intervalle de temps d'activation (« ΔT ») au cours duquel au moins un des systèmes flexibles 205 est configuré pour être en mesure de réduire sa consommation, et/ou d'augmenter sa production, sur demande, d'une puissance inférieure ou égale à la puissance de réserve engagée.

Selon un mode de réalisation, les étapes 310 à 340 sont utilisées pour déterminer la puissance de réserve engagée P et l'intervalle de temps d'activation ΔT. La puissance de réserve engagée P est par exemple inférieure ou égale à la capacité d'engagement en réserve d'un système flexible et l'intervalle de temps d'activation ΔT est par exemple compris dans une période de disponibilité du système flexible. La puissance de réserve engagée P est en outre inférieure ou égale à la capacité d'engagement en réserve du deuxième générateur GEN2 et l'intervalle de temps d'activation ΔT est par exemple constitué de pas de temps pour lesquels le deuxième générateur GEN2 est disponible.

Par exemple, la puissance de réserve engagée P correspond au minimum entre la capacité d'engagement en réserve du système flexible et la capacité d'engagement en réserve du deuxième générateur GEN2. L'intervalle de temps d'activation ΔT correspond par exemple à l'intersection entre la période de disponibilité du système flexible et la période de disponibilité du deuxième générateur GEN2.

La puissance de réserve engagée P est par exemple déterminée pour chaque pas de temps de l'intervalle de temps d'activation ΔT, en considérant le ou les deuxièmes générateurs GEN2 de ce pas de temps, par exemple en considérant le générateur marginal sur les marchés de réserve pour ce pas de temps.

Le procédé 300 comprend par exemple une étape 360 (« CALC ΔE »), par exemple suivant l'étape 350. Au cours de l'étape 360, le dispositif de calcul et de commande est par exemple configuré pour calculer une variation des émissions de gaz à effet de serre ΔE générée par une augmentation de production du deuxième générateur GEN2 et une réduction de production du premier générateur GEN1 sur l'intervalle de temps d'activation ΔT déterminé à l'étape 350.

Tout ou une partie de l'engament en réserve du deuxième générateur GEN2 est par exemple prise en charge par le système flexible qui est configuré pour être en mesure de réduire sa consommation, et/ou d'augmenter sa production, sur demande pendant l'intervalle de temps d'activation ΔT. En conséquence, le deuxième générateur GEN2 génère une puissance supplémentaire correspondant à la puissance de réserve engagée P déterminée à l'étape 350 et le premier générateur GEN1 réduit sa production et génère par exemple la puissance de réserve engagée P en moins. La réduction de puissance du premier générateur GEN1 correspond par exemple à l'augmentation de puissance du deuxième générateur GEN2.

La variation des émissions de gaz à effet de serre ΔE est par exemple définie, sur un pas de temps, par :
$Δ E = Δ E \left(GEN2\right) - Δ E \left(GEN1\right)$
où ΔE(GEN1) correspond à une variation des émissions de gaz à effet de serre générées par le premier générateur GEN1, et ΔE(GEN2) correspond à une variation des émissions de gaz à effet de serre générées par le deuxième générateur GEN2. On considère par exemple qu'il y a une réduction des émissions de gaz à effet de serre lorsque ΔE est négative.

Par exemple, la valeur ΔE (GEN1) correspond à l'émission de gaz à effet de serre évitée par le premier générateur GEN1 au cours de l'intervalle de temps d'activation ΔT et correspond par exemple à l'émission de gaz à effet de serre lors de la génération d'une unité d'énergie, déterminée à l'étape 330, multipliée par la puissance de réserve engagée P et multipliée par le pas de temps.

Par exemple, la valeur ΔE(GEN2) correspond à l'émission de gaz à effet de serre supplémentaire par le deuxième générateur GEN2 au cours de l'intervalle de temps d'activation ΔT et correspond par exemple à l'émission de gaz à effet de serre lors de la génération d'une unité de puissance, déterminée à l'étape 340, multipliée par la puissance de réserve engagée P et multipliée par le pas de temps.

Selon un mode de réalisation, la puissance de réserve engagée P est supérieure à la puissance générée par le premier générateur GEN1. Le premier générateur GEN1 est par exemple configuré pour ne plus générer de puissance électrique et la puissance générée par un troisième générateur est par exemple réduite de sorte à compenser l'augmentation de production du deuxième générateur GEN2. Le troisième générateur est par exemple choisi selon les mêmes critères que le premier générateur GEN1. Le troisième générateur correspond par exemple au générateur ayant un coût unitaire de production le plus élevé, après le premier générateur GEN1. Dans l'équation de détermination de la variation des émissions de gaz à effet de serre ΔE, la valeur ΔE(GEN1) correspond alors aux émissions de gaz à effet de serre évitées par le premier générateur GEN1 et le troisième générateur.

Selon un mode de réalisation, plusieurs systèmes flexibles 205 sont engagés pour un même pas de temps. Les systèmes flexibles 205 sont par exemple considérés comme un système flexible ayant par exemple une période d'activation correspondant à la réunion des périodes d'activation de chaque système flexible et ayant par exemple une puissance de réserve engagée variable en fonction du temps. Pour chaque pas de temps de la période d'optimisation, la puissance de réserve engagée est par exemple définie par la somme des puissances d'activation de chaque système flexible. Par exemple, la puissance de réserve engagée P est répartie entre les systèmes flexibles.

Selon un mode de réalisation, l'intervalle de temps d'activation ΔT est constitué de pas de temps non consécutifs et comprend plusieurs sous-intervalles de temps discontinus. Par exemple, chaque sous-intervalle de temps est associé à une puissance de réserve engagée. Chaque sous-intervalle de temps d'activation et chaque puissance de réserve engagée associée sont par exemple déterminés selon le procédé 300, par exemple en prenant en compte des caractéristiques des systèmes flexibles, par exemple un nombre maximal d'activation sur la période d'optimisation, et par exemple en prenant en compte des règles d'opération du marché du système d'alimentation électrique.

Il existe par exemple plusieurs configurations possibles. Par « configuration », on entend un quadruplet composé d'un premier générateur GEN1, d'un deuxième générateur GEN2, d'un ou plusieurs intervalles de temps d'activation ΔT et d'une puissance de réserve engagée pour chaque intervalle de temps d'activation ΔT. Selon un mode de réalisation, l'étape 360 est exécutée pour chacune de ces configurations afin de déterminer la configuration correspondant à la réduction des émissions de gaz à effet de serre la plus élevée, c'est-à-dire à la valeur ΔE la plus négative.

Selon un mode de réalisation, la variation des émissions de gaz à effet de serre ΔE est calculée pour chaque pas de temps de la période d'optimisation, pour le générateur GEN1 déterminé à l'étape 330 et pour chaque générateur GEN2 déterminés à l'étape 340. Chaque pas de temps est par exemple ensuite trié selon la variation des émissions de gaz à effet de serre ΔE associée et un nombre fixé N de pas de temps est par exemple sélectionné. Le nombre N de pas de temps est par exemple déterminé par la durée de l'intervalle de temps d'activation ΔT, de sorte que ΔT=N*dT avec dT le pas de temps. Les N pas de temps sont par exemple choisis selon la variation des émissions de gaz à effet de serre ΔE calculée croissante, c'est-à-dire que les pas de temps correspondant aux N valeurs de ΔE les plus négatives sont sélectionnés.

Selon un autre mode de réalisation, l'ensemble des configurations est analysé par une fonction de résolution d'un problème d'optimisation, par exemple un problème d'optimisation de type optimisation linéaire en nombres entiers (de l'anglais « Mixed Integers Non-Linear Programming »), afin de déterminer la configuration correspondant à la réduction des émissions de gaz à effet de serre la plus élevée, c'est-à-dire à la valeur ΔE la plus négative. La fonction de résolution du problème d'optimisation est par exemple configurée pour déterminer l'intervalle de temps d'activation ΔT. La fonction de résolution du problème d'optimisation est par exemple en outre configurée pour déterminer la puissance de réserve engagée P et/ou pour calculer la variation des émissions de gaz à effet de serre ΔE. La fonction de résolution du problème d'optimisation est par exemple configurée pour exécuter les étapes 330, 340, 350 et 360, une ou plusieurs fois. La fonction de résolution du problème d'optimisation est par exemple configurée pour déterminer une ou plusieurs configurations ayant une variation des émissions de gaz à effet de serre ΔE relativement grande et négative, par exemple supérieure ou égale à 5% en valeur absolue.

La figure 3B représente un procédé 300' de réduction des émissions de gaz à effet de serre d'un système d'alimentation électrique selon un mode de réalisation de la présente description.

Le procédé 300' comprend par exemple les étapes 310 à 360 du procédé 300, détaillées en relation avec la figure 3A, et configurées pour déterminer le premier générateur GEN1, le deuxième générateur GEN2, l'intervalle de temps d'activation ΔT et la puissance de réserve engagée P et pour calculer la variation des émissions de gaz à effet de serre ΔE correspondante.

Le procédé 300' comprend par exemple une étape 370 (« COMM WITH NETWORK OPERATOR »), par exemple suivant les étapes 310 à 360, dans lequel le dispositif de calcul et de commande est par exemple configuré pour transmettre la puissance de réserve engagée P et l'intervalle de temps d'activation ΔT déterminés par les étapes 350 et 360 au système d'alimentation électrique.

Le dispositif de calcul et de commande est par exemple configuré pour transmettre au gestionnaire 215 décrit en relation avec la figure 2, ou à un opérateur de marché, la puissance de réserve engagée P et l'intervalle de temps d'activation ΔT déterminés pour le système d'électricité flexible et par exemple pour transmettre des caractéristiques du système flexible 205 et/ou du deuxième générateur GEN2 déterminé. Le gestionnaire 215, ou l'opérateur de marché, est par exemple configuré pour confirmer les engagements capacitaires retenus. Par exemple, le gestionnaire 215 envoie, par l'intermédiaire du DERMS 150, une confirmation, par exemple par email.

Le dispositif de calcul et de commande est par exemple en outre configuré pour intégrer dans le système central de gestion d'énergie 106, décrit en relation avec la figure 1, par exemple au DERMS 150 du système central de gestion d'énergie 106, un ordre de régulation, par exemple pour chaque pas de temps de l'intervalle de temps d'activation ΔT. L'ordre d'activation identifie par exemple des caractéristiques du système d'électricité flexible, par exemple s'il s'agit d'un engagement capacitaire de réserve primaire, secondaire ou tertiaire.

Selon un mode de réalisation, le DERMS 150 est configuré pour commander des consommateurs et/ou producteurs en exécutant des ordres d'activation ou de régulation. Pour recevoir et traiter ces ordres, le DERMS reçoit, par exemple via une interface numérique, un paramétrage comprenant l'intervalle de temps d'activation ΔT, la puissance de réserve engagée P, une désignation du premier générateur GEN1 et par exemple du deuxième générateur GEN2 et le système flexible.

Le procédé 300' comprend par exemple une étape 380 (« COMM WITH FLEX »), par exemple suivant l'étape 370, dans lequel le dispositif de calcul et de commande est par exemple configuré pour transmettre une commande au système d'électricité flexible pour le rendre disponible sur demande pour la puissance de réserve engagée P et sur l'intervalle de temps d'activation ΔT. Par exemple, le dispositif de calcul et de commande est configuré pour envoyer au système d'électricité flexible une consigne comprenant la puissance de réserve engagée P et l'intervalle de temps d'activation ΔT. Le système d'électricité flexible est par exemple configuré pour réduire sa consommation, ou augmenter sa production, sur demande, par exemple en fonction d'un écart de fréquence du système d'alimentation électrique, sur l'intervalle de temps d'activation ΔT. Le système d'électricité flexible est par exemple configuré pour réduire sa consommation, ou augmenter sa production, sur demande, par exemple par l'intermédiaire d'un variateur de vitesse ou d'un relais de puissance.

La transmission de la commande est par exemple effectuée par l'intermédiaire d'un DERMS, par exemple selon un protocole de communication MQTT (de l'anglais "Message Queuing Telemetry Transport") ou DNP3 (de l'anglais "Distributed Network Protocol 3"), par l'intermédiaire d'un dispositif de communication du système, par téléphone, par courrier électronique, etc.

A titre de variante, l'ordre d'exécution des étapes 370 et 380 est inversé.

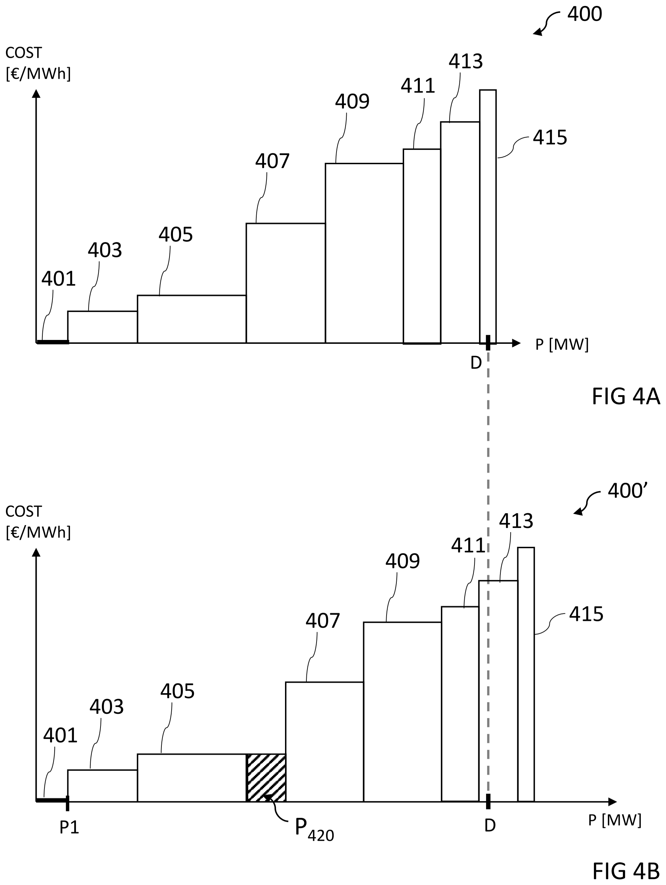

La figure 4A est un graphe 400 illustrant le coût unitaire (« COST [€/MWh] ») d'une unité de puissance (« P [MW] ») produite par une pluralité de dispositifs, pendant une heure, ainsi qu'un exemple d'une répartition de la puissance produite par le système d'alimentation électrique selon un mode de réalisation de la présente description.

Dans l'exemple de la figure 4A, la puissance distribuée par le système d'alimentation électrique est générée par des dispositifs 401, 403, 405, 407, 409, 411, 413 et 415. Chacun des dispositifs 401 à 415 est par exemple configuré pour générer une puissance à un coût unitaire fixé. Par exemple, le dispositif 401 est configuré pour générer une puissance P1 gratuitement, c'est-à-dire avec un coût unitaire de 0 €/MWh. Le dispositif 401 est par exemple une éolienne ou un panneau photovoltaïque.

Dans le graphe 400, les dispositifs 401 à 415 sont ordonnés selon le coût unitaire de l'énergie générée. Par exemple, les consommateurs souhaitent acheter de l'électricité ayant un coût relativement faible et les générateurs sont sélectionnés par ordre croissant de leur coût unitaire.

Un ou plusieurs des dispositifs 401 à 415 est par exemple engagé en réserve. Dans l'exemple de la figure 4A, le dispositif 405 est engagé en réserve. Le dispositif 405 est configuré pour générer une puissance inférieure à sa puissance maximale et configuré pour augmenter ou réduire la puissance générée, par exemple en fonction d'une fréquence du système d'alimentation électrique.

La demande D du système d'alimentation électrique correspond à une puissance souhaitée par un ensemble de consommateurs. Dans l'exemple de la figure 4A, les dispositifs sont considérés selon le coût unitaire croissant de la puissance générée et l'ensemble des dispositifs 401 à 415 sont requis pour satisfaire la demande D. Dans l'exemple de la figure 4A, le générateur 145 ne génère pas sa puissance maximale pour satisfaire la demande D.

Une émission de gaz à effet de serre du système d'alimentation électrique pour satisfaire la demande D correspond par exemple à la somme des émissions de gaz à effet de serre de chacun des dispositifs 401 à 415.

L'émission de gaz à effet de serre E du système d'alimentation électrique, au cours d'un pas de temps dT, est par exemple définie par :
$E = {\sum }_{i} {Em}_{i} \times {P}_{i} \times dT$
avec Emᵢ l'émission unitaire de gaz à effet de serre du dispositif i et Pᵢ la puissance générée par le dispositif i au cours du pas de temps dT. La puissance Pi générée par le dispositif i est par exemple inférieur à sa puissance maximale si le dispositif i est engagé en réserve.

La figure 4B est un graphe 400' illustrant le coût unitaire (« COST [€/MWh] ») d'une unité de puissance (« P [MW] ») produite par les dispositifs 401 à 415 de la figure 4A pendant une heure ainsi qu'un exemple d'une répartition de la puissance produite par le système d'alimentation électrique selon un autre mode de réalisation de la présente description.

Des éléments de la figure 4B sont similaires à des éléments de la figure 4A. Ces éléments sont référencés avec la même référence et ne sont pas décrits à nouveau en détail.

La figure 4B se différencie de la figure 4A en ce que le dispositif 405 n'est plus engagé en réserve dans l'exemple de la figure 4B.

Par exemple, un ou plusieurs systèmes d'électricité flexibles, non illustrés, sont engagés avec une capacité d'engagement.

Le procédé 300 ou 300' est par exemple mis en œuvre pour identifier le ou les dispositifs engagés en réserve et pour identifier la configuration la plus avantageuse, en fonction des émissions en gaz à effet de serre des dispositifs.

Par exemple, le dispositif 405 est identifié pour générer une puissance supplémentaire P₄₂₀ sur l'intervalle de temps d'activation ΔT, par exemple égale à la capacité d'engagement de l'un ou plusieurs systèmes d'électricité flexibles. Cette puissance supplémentaire P₄₂₀ est représentée par des hachures sur la figure 4B.

Pour une même demande D que dans l'exemple de la figure 4A, le dispositif 415 n'est plus requis et le dispositif 413 est configuré pour générer une puissance réduite.

La variation des émissions de gaz à effet de serre ΔE réalisée est par exemple calculée au cours du procédé 300.

Dans l'exemple de la figure 4B, on a par exemple :
$Δ E = \left({Em}_{405}\times {P}_{420}-{Em}_{415}\times {P}_{415}-{Em}_{413}\times Δ{P}_{413}\right) \times Δ T$
avec Em₄₀₅ l'émission unitaire de gaz à effet de serre du dispositif 405, Em₄₁₅ l'émission unitaire de gaz à effet de serre du dispositif 415, P₄₁₅ la puissance générée par le dispositif 415 sur l'intervalle de temps d'activation ΔT dans l'exemple de la figure 4A, Em₄₁₃ l'émission unitaire de gaz à effet de serre du dispositif 413 et ΔP₄₁₃ la réduction de puissance générée, sur l'intervalle de temps d'activation ΔT, par le dispositif 413 entre l'exemple de la figure 4A et celui de la figure 4B.

Les étapes 370 et 380 du procédé 300', décrites en relation avec la figure 3B, sont par exemple exécutées pour que le générateur 405 augmente sa production et pour assurer un engagement en réserve de l'un ou plusieurs systèmes d'électricité flexibles.

Les procédés 300 et 300' ainsi que les systèmes décrits ont l'avantage de permettre de déterminer des configurations conduisant à une réduction d'une émission en gaz à effet de serre du système d'alimentation électrique, tout en assurant une stabilité du système d'alimentation électrique. En effet, l'engagement en réserve du deuxième générateur GEN2 est reporté sur des systèmes d'électricité flexibles qui sont configurés pour continuer de garantir la stabilité du système d'alimentation électrique, par exemple en réduisant leur consommation lorsqu'un écart de fréquence du réseau est supérieur à un seuil.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, l'ordre des étapes des procédés est indicatif et la personne du métier saura adapter les procédés décrits en fusionnant certaines étapes ou en modifiant l'ordre d'exécution des étapes. Bien qu'un système d'alimentation électrique alternatif soit décrit, la personne du métier saurait adapter les modes de réalisation décrits dans la présente demande à un système d'alimentation électrique continu.

Enfin, la mise en œuvre pratique des modes de réalisation et variantes décrits est à la portée de la personne du métier à partir des indications fonctionnelles données ci-dessus.

## Revendications

1. Procédé d'estimation d'une variation des émissions de gaz à effet de serre (ΔE) d'un système d'alimentation électrique fonctionnant en réponse de la demande, le procédé comprenant :
a) la réception, par un dispositif de commande, de caractéristiques de fonctionnement, comprenant au moins une période de disponibilité et une capacité d'engagement, d'un ou plusieurs systèmes électriques flexibles (205) ;
b) la réception, par le dispositif de commande, d'informations indiquant un état de la demande sur le système d'alimentation électrique et un état de fonctionnement d'une pluralité d'actifs générateurs (220) du système d'alimentation électrique ;
c) la détermination, par le dispositif de commande, d'un premier actif générateur (GEN1) parmi la pluralité d'actifs générateurs (220) du système d'alimentation électrique, le premier actif générateur (GEN1) ayant un coût unitaire le plus élevé parmi la pluralité d'actifs générateurs (220) et la détermination, par le dispositif de commande, de son émission de gaz à effet de serre ;
d) la détermination, par le dispositif de commande, d'un deuxième actif générateur (GEN2) parmi la pluralité d'actifs générateurs (220) du système d'alimentation électrique, le deuxième actif générateur (GEN2) étant engagé en réserve et la détermination, par le dispositif de commande, de son émission de gaz à effet de serre ;
e) la détermination, par le dispositif de commande, d'une première puissance (P) et d'un intervalle de temps d'activation (ΔT) au cours duquel les systèmes électriques flexibles peuvent faire varier leur consommation sur demande par une puissance inférieure ou égale à la première puissance (P) ; et
f) le calcul, par le dispositif de commande, de la variation des émissions de gaz à effet de serre (ΔE) générée par une augmentation de production du deuxième actif générateur (GEN2) et une réduction de production du premier actif générateur (GEN1) sur l'intervalle de temps d'activation (ΔT) déterminé à l'étape e).

2. Procédé de réduction des émissions de gaz à effet de serre (ΔE) d'un système d'alimentation électrique fonctionnant en réponse de la demande, le procédé comprenant :
- le procédé d'estimation d'une variation des émissions de gaz à effet de serre (ΔE) selon la revendication 1 ;
g) la transmission, par le dispositif de commande, de la première puissance (P) et de l'intervalle de temps d'activation (ΔT), définis à l'étape e), au système d'alimentation électrique ; et
h) la transmission, par le dispositif de commande, d'une commande à l'au moins un des systèmes électriques flexibles (205) pour le rendre disponible sur demande pour la première puissance (P) et sur l'intervalle de temps d'activation (ΔT) définis à l'étape e).

3. Procédé selon la revendication 1 ou 2, dans lequel le deuxième actif générateur (GEN2) correspond au générateur marginal sur le marché de réserve.

4. Procédé selon l'une quelconque des revendications 1 à 3, dans lequel la première puissance (P) et l'intervalle de temps d'activation (ΔT) sont déterminés de sorte que la variation des émissions de gaz à effet de serre (ΔE) soit négative, correspondant à une réduction des émissions de gaz à effet de serre (ΔE).

5. Procédé selon l'une quelconque des revendications 1 à 4, dans lequel, à l'étape e), une fonction de résolution d'un problème d'optimisation est utilisée pour déterminer l'intervalle de temps d'activation (ΔT).

6. Procédé selon l'une quelconque des revendications 1 à 5, comprenant en outre à l'étape e), pour chaque pas de temps de la période de disponibilité de l'un ou plusieurs systèmes électriques flexibles (205), le calcul, par le dispositif de commande, de la variation des émissions de gaz à effet de serre générée par une augmentation de production du deuxième actif générateur (GEN2) et une réduction de production du premier actif générateur (GEN1) sur le pas de temps.

7. Procédé selon la revendication 6, dans lequel les pas de temps de la période de disponibilité de l'un ou plusieurs systèmes électriques flexibles (205) sont triés, par le dispositif de commande, selon la variation des émissions de gaz à effet de serre calculée à l'étape e) et sont sélectionnés de sorte à obtenir une réduction des émissions de gaz à effet de serre (ΔE), telle que calculée à l'étape f), la plus élevée.

8. Procédé selon l'une quelconque des revendications 1 à 7, dans lequel l'état de fonctionnement d'un actif générateur comprend une puissance d'engagement en réserve de l'actif générateur.

9. Procédé selon l'une quelconque des revendications 1 à 8, dans lequel le coût unitaire d'un actif générateur correspond à un coût monétaire d'une unité d'énergie.

10. Procédé selon l'une quelconque des revendications 1 à 9, dans lequel l'émission de gaz à effet de serre d'un actif générateur correspond à l'émission de gaz à effet de serre produite par la génération d'une unité d'énergie.

11. Procédé selon l'une quelconque des revendications 1 à 10, dans lequel l'émission de gaz à effet de serre d'un actif générateur est déterminée sur la base d'une base de données.

12. Dispositif de commande (210) configuré pour :
a) recevoir des caractéristiques de fonctionnement, comprenant au moins une période de disponibilité et une capacité d'engagement, d'un ou plusieurs systèmes électriques flexibles (205) ;
b) recevoir des informations indiquant un état de la demande sur le système d'alimentation électrique et un état de fonctionnement d'une pluralité d'actifs générateurs (220) du système d'alimentation électrique ;
c) déterminer un premier actif générateur (GEN1) parmi la pluralité d'actifs générateurs (220) du système d'alimentation électrique, le premier actif générateur (GEN1) ayant un coût unitaire le plus élevé parmi la pluralité d'actifs générateurs (220) et pour déterminer son émission de gaz à effet de serre ;
d) déterminer un deuxième actif générateur (GEN2) parmi la pluralité d'actifs générateurs (220) du système d'alimentation électrique, le deuxième actif générateur (GEN2) étant engagé en réserve et pour déterminer son émission de gaz à effet de serre ;
e) déterminer une première puissance (P) et un intervalle de temps d'activation (ΔT) au cours duquel les systèmes électriques flexibles peuvent faire varier leur consommation sur demande par une puissance inférieure ou égale à la première puissance (P) ; et
f) calculer la variation des émissions de gaz à effet de serre (ΔE) générée par une augmentation de production du deuxième actif générateur (GEN2) et une réduction de production du premier actif générateur (GEN1) sur l'intervalle de temps d'activation (ΔT) déterminé à l'étape e).

13. Dispositif de commande selon la revendication 12, en outre configuré pour :
g) transmettre la première puissance (P) et l'intervalle de temps d'activation (ΔT), définis à l'étape e), au système d'alimentation électrique ; et
h) transmettre une commande à l'au moins un des systèmes électriques flexibles (205) pour le rendre disponible sur demande pour la première puissance (P) et sur l'intervalle de temps d'activation (ΔT) définis à l'étape e).

14. Système de régulation d'une puissance comprenant :
- le dispositif de commande selon la revendication 12 ou 13 ; et
- un ou plusieurs systèmes électriques flexibles (205),
le dispositif de commande étant configuré pour communiquer avec l'un ou plusieurs systèmes électriques flexibles (205) et avec le système d'alimentation électrique.
